# EUROPÄISCHE PATENTSCHRIFT

(11) **EP 0 935 932 B1**
(45) Veröffentlichungstag und Bekanntmachung des Hinweises auf die Patenterteilung: **08.05.2002**
(21) Anmeldenummer: 98102252.8
(22) Anmeldetag: 10.02.1998
(51) Int. Cl.: A47B 47/02, B65G 1/02

(54) **Lagerregal, vorzugsweise für die Lagerung bestückter Paletten**
Storage shelving, especially for the storage of loaded pallets
Etagère de stockage, en particulier pour le stockage de palettes chargées

(43) Veröffentlichungstag der Anmeldung: 18.08.1999
(73) Patentinhaber: NEDCON MAGAZIJNINRICHTING B.V., NL-7000 AA Doetinchem (NL)
(72) Erfinder: Hollander, R.R., 7251 KC Vorden (NL)
(74) Vertreter: Stenger, Watzke & Ring Patentanwälte

(56) Entgegenhaltungen:
- DE-U- 8 813 548
- US-A- 3 695 456
- US-A- 5 628 415

## Beschreibung

Die Erfindung betrifft ein Lagerregal, vorzugsweise für die Lagerung bestückter Paletten, mit einer Stützkonstruktion aus vertikalen Stützen, zwischen denen sich quer zur Ein- und Auslagerungsrichtung Traversen erstrecken, sowie mit in Ein- und Auslagerungsrichtung sich erstreckenden, auf einer vorderen Traverse und zusätzlich auf mindestens einer dahinter angeordneten Traverse abgestützten Tragprofilen, auf deren Oberseite die Paletten aufliegen. Eine solcher Lagerregal ist aus der Druckschrift US-A-3 695 456 bereits bekannt.

Anwendung finden solche Lagerregale in erster Linie in Großlagern mit automatischer, rechnergesteuerter Ein- und Auslagerung bestückter Paletten. Die normgerechten Paletten werden mit Hilfe speziell konstruierter Fördergeräte in dem jeweils gewünschten Fach des Regals abgesetzt und daraus wieder entnommen. Die Paletten liegen hierbei auf Tragprofilen auf, die sich wiederum auf die Stützen des Regals verbindenden Quertraversen abstützen. Je nach Bauart der Palette kann dabei ein gewisser Freiraum zwischen der Unterseite der Palette und der Quertraverse erforderlich sein, in den die Teleskopgabeln des Fördergerätes beim Einlagern oder Auslagern hineinfahren können. Zur Bereitstellung dieses vertikalen Freiraumes sind bereits Konstruktionen bekannt, bei denen die auf den Quertraversen aufliegenden Tragprofile, deren Höhe letztlich auch die Höhe des benötigten Freiraumes bestimmt, eine größere Bauhöhe aufweisen als dies für die statische Funktion der Tragprofile erforderlich wäre. Die sich in Tiefenrichtung und quer zu den Traversen erstreckenden Tragprofile müssen ferner sowohl mit der vorderen als auch mit mindestens einer dahinter angeordneten Traverse verschraubt werden, um ein Abheben der Tragprofile zu verhindern, etwa in solchen Fällen, in denen Tragprofile nach vorne aus dem Regal herauskragen und in diesem Bereich belastet werden, so daß ein Kippmoment entsteht. Die Verschraubung der Tragprofile mit zumindest der vorderen Traverse und einer dahinter angeordneten Traverse ist ferner erforderlich, um die Tragprofile in seitlicher Richtung auf die genormte Breite der Paletten einzustellen. Um die zeitaufwendige Verschraubung der Tragprofile mit den Traversen etwas zu erleichtern, werden für die Traversen offene Profile eingesetzt, die allerdings im Vergleich zu geschlossenen Stahlprofilen desselben Querschnitts eine geringere Belastbarkeit aufweisen. Die montagebedingte Verwendung offener Profile für die Traversen erfordert daher größere Querschnitte und vor allem größere Querschnittshöhen der Traversen. Der hierdurch eintretende Verlust an nutzbarer Höhe ist zwar in jeder Regalebene für sich betrachtet nicht groß, da jedoch gattungsgemäße Lagerregale bis zur Höhe von über 30 m errichtet werden, bestehen durch die Verwendung offener Traversenprofile gleichwohl erhebliche Platznachteile.

Wenngleich die Verwendung offener Tragprofile die Zugänglichkeit zu den Verschraubungsstellen vereinfacht und damit auch die Montage etwas erleichtert, ist zur Errichtung des Lagerregals nach US-A-3 695 456 immer noch ein erheblicher Montageaufwand und damit kostenträchtiger Zeitaufwand verbunden. Von Nachteil ist schließlich, daß zur Erzielung eines veränderten Freiraumes zwischen der Oberkante der Traverse und der Unterseite der Palette die Verwendung anderer, d. h. höher bzw. niedriger bauender Tragprofile erforderlich ist. Je nach Anwendungsfall, der von der Bauhöhe der Teleskopgabeln des verwendeten Fördergerätes, aber auch von der Art der Palette abhängen kann, müssen daher unterschiedlich hohe Tragprofile verwendet werden, was den Hersteller dazu zwingt, verschiedene Tragprofile in jeweils großen Stückzahlen vorrätig zu halten.

Der Erfindung liegt die **Aufgabe** zugrunde, ein Lagerregal mit besonderer Eignung für die Lagerung bestückter Paletten zu schaffen, das sich im Vergleich zu bekannten, gleich stark belastbaren Regalen mit weniger Montageaufwand und damit in kürzerer Zeit erstellen läßt.

Zur **Lösung** wird bei einem Lagerregal der eingangs genannten Art vorgeschlagen, daß die Tragprofile auf Konsolen aufliegen, daß jede Konsole mit der darunterliegenden Traverse fest verbunden ist, und daß zum Zwecke einer vertikalen Verriegelung des Tragprofils an der Konsole das Tragprofil mit mindestens einem daran ausgebildeten Verriegelungsabschnitt unter einen an der Konsole ausgebildeten verriegelnden Bereich greift.

Ein solchermaßen ausgebildetes Lagerregal zeichnet sich dadurch aus, daß es sich im Vergleich zu den bekannten Regalen mit weniger Montageaufwand und damit in kürzerer Zeit erstellen läßt. Eine vollständige Verschraubung der Tragprofile an den Konsolen ist nicht erforderlich, vielmehr müssen die Tragprofile lediglich von der einen Seite des Regals her über die Konsolen geschoben werden. Um hierbei das Tragprofil vertikal an den Konsolen zu verriegeln, greift jedes Tragprofil mit mindestens einem daran ausgebildeten Verriegelungsabschnitt unter einen an der Konsole ausgebildeten verriegelnden Bereich. Ferner können die einzelnen Traversen bereits vor der Endmontage des Regals mit den Konsolen versehen werden, wozu in einer bevorzugten Ausgestaltung der Erfindung die Konsolen einzeln mit der jeweils darunterliegenden Traverse verschweißt sind. Aber selbst für den Fall, daß die Konsolen an den darunterliegenden Traversen verschraubt sind, läßt sich diese Arbeit an einem hierfür geeigneten Ort vorbereitend erledigen, so daß diese zeitaufwendigen Arbeiten nicht bei der Endmontage durchgeführt werden müssen, bei der die damit befaßten Arbeiter oft in dem Großregal herumklettern müssen.

Sofern die Konsolen mit den jeweiligen Traversen verschweißt sind, kann zusätzlich eine vollständige Lackierung oder andere Oberflächenbehandlung der so hergestellten Baueinheit vorgenommen werden, so daß auch diesbezügliche Arbeiten bei der Endmontage vor Ort nicht mehr erforderlich sind. Zur Montage des Lagerregals ist es daher nach Aufstellung und etwaiger Querverstrebung der vertikalen Stützen lediglich noch erforderlich, die bereits vorgefertigten und mit den Konsolen für die Tragprofile versehenen Traversen zwischen diesen Stützen zu befestigen und dann die Tragprofile in Richtung der Tiefe des Regals über die Konsolen zu schieben.

Um die Tragprofile ohne zusätzliche Befestigungsschritte in seitlicher Richtung zu fixieren, ist das Tragprofil mit wenigstens einem nach unten in Richtung auf die Traverse ragenden Profilabschnitt versehen, wodurch ohne zusätzliche Verschraubung die seitliche Fixierung des Tragprofils gesichert ist.

Zur Realisierung des die Tragprofile gegen ein vertikales Abheben von den Konsolen sichernden Verriegelungsabschnittes wird gemäß einer Ausgestaltung vorgeschlagen, daß das Tragprofil den Querschnitt eines nach unten hin offenen "C" aufweist, dessen beiden nach innen hin aufeinander zu gerichtete Abschnitt die Verriegelungsabschnitte bilden. Demgegenüber kann der verriegelnde Bereich der Konsole durch eine Erweiterung gebildet werden, die am oberen Ende der Konsole angeformt ist.

Durch die vorgenannte Verriegelung ist das Tragprofil gegen seitliches Verrutschen und gegen ein vertikales Abheben von den Konsolen gesichert. Um das Tragprofil auch in seiner Längsrichtung zu verriegeln, wird gemäß einer weiteren Ausgestaltung des Lagerregals vorgeschlagen, daß zur formschlüssigen Fixierung ein Stift, eine Schraube oder dgl. durch Tragprofil und Konsole zugleich hindurchgeführt ist. Um den Montageaufwand so gering wie möglich zu halten, ist es nicht erforderlich, das Tragprofil an allen Konsolen zu fixieren, auf denen sich das Tragprofil abstützt. Vielmehr wird zum Zwecke der schnelleren Montage vorgeschlagen, daß das Tragprofil nur an seiner mit der vorderen Traverse verbundenen Konsole in Längsrichtung verriegelt ist, wohingegen eine entsprechende Verriegelung an der/den dahinter angeordneten Traverse/Traversen fehlt. Die insoweit für die Verriegelung herangezogene Konsole ist vorzugsweise die vordere Konsole, da diese bei der Montage des Regals durch die damit befaßten Monteure am besten zugänglich ist. Es entfallen daher Montagehandgriffe in dem weiter hinten liegenden Teil des Regals.

Um die Gewichtskräfte der beladenen Paletten besser auf die darunter angeordneten Traversen abzuführen, wird mit einer weiteren Ausgestaltung der Erfindung vorgeschlagen, daß die Konsole mit der Oberseite der Traverse und zusätzlich mit zumindest einer vertikalen Fläche der Traverse verschweißt ist.

Schließlich ist es zur Erzielung einer geringen Querschnittshöhe der Traverse von sehr großem Vorteil, wenn diese als geschlossenes Metallprofil mit vorzugsweise rechteckigem Querschnitt gestaltet ist.

Weitere Einzelheiten und Vorteile der Erfindung werden nachfolgend anhand eines Ausführungsbeispieles erläutert, das auf der Zeichnung dargestellt ist. Im einzelnen zeigen:
- Fig. 1: in einer perspektivischen Darstellung einen Ausschnitt aus einem mehrstöckig aufgebauten Lagerregal für die Lagerung bestückter Paletten,
- Fig. 2: in einer Frontansicht eine Traverse mit darauf aufgeschweißter Konsole, die wiederum ein Tragprofil trägt,
- Fig. 3: die in Fig. 2 dargestellten Einzelheiten in einer Seitenansicht mit Schnitt durch die Traverse und
- Fig. 4: Einzelheiten der Fig. 1 in vergrößertem Maßstab.

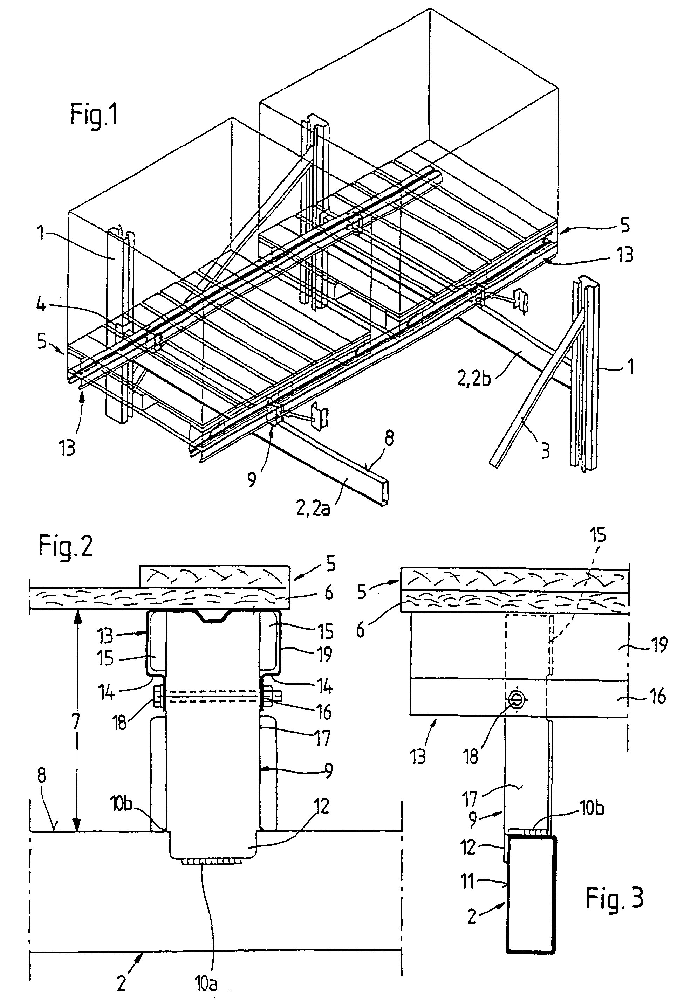

In Fig. 1 ist lediglich ein kleiner Ausschnitt aus einem ausgedehnten Regal zur Lagerung normierter, beladener Paletten dargestellt. Derartige Regal können, abhängig von der jeweiligen Höhe der Fächer, fünfzehn und mehr Stockwerke hoch sein. Die Grundstruktur des Regals besteht aus vertikalen Stützen 1 und horizontalen Traversen 2, welche die Stützen 1 miteinander verbinden und der Gesamtkonstruktion nach Art eines Fachwerks Stabilität verleihen. Zur Erzielung der erforderlichen Stabilität sind ferner schräge Verstrebungen 3 zwischen den Stützen 1 angeordnet.

Beim Ausführungsbeispiel sind die vertikalen Stützen 1 als C-Profile gestaltet, in deren offenen Kanälen die schrägen Verstrebungen 3 verschraubbar sind. Bei den Traversen 2 handelt es sich, wie auf der Zeichnung erkennbar ist, um geschlossene Stahlprofile mit rechteckigem Querschnitt. Diese sind an ihren Enden über Verbindungselemente 4 an den vertikalen Stützen 1 angeschraubt.

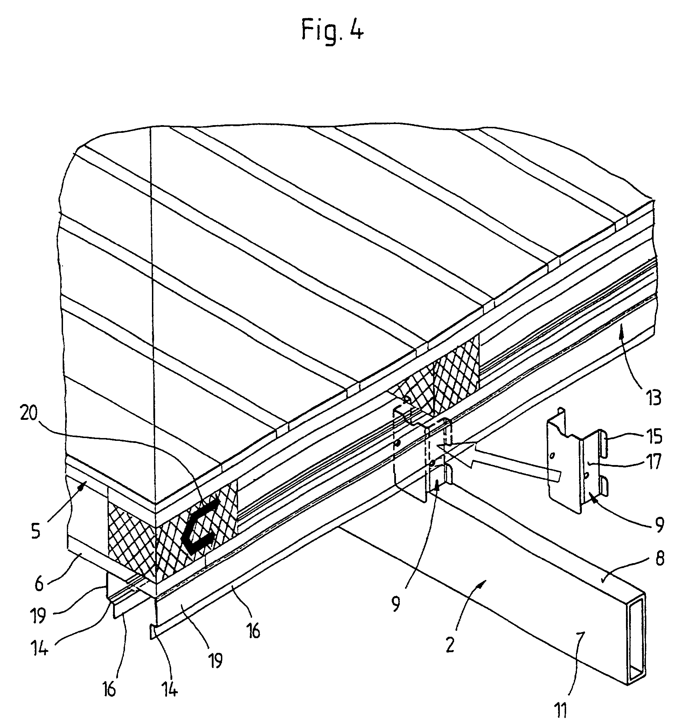

Die auf den Figuren 1 und 4 dargestellten Paletten 5 erfordern, da ihr stirnseitig angeordnetes Unterholz 6 zugleich die Unterseite der Palette 5 bildet, einen gewissen vertikalen Freiraum 7, in den zum Einlagern und Auslagern der Palette 5 die Teleskopgabeln des verwendeten Fördergerätes einfahren können.

Die Höhe dieses vertikalen Freiraumes 7 wird durch den Abstand zwischen der Oberseite 8 der Traverse 2 und dem Unterholz 6 der Palette 5 bestimmt.

Auf die Oberseite 8 der Traversen 2 sind Konsolen 9 aufgeschweißt. Eine erste Schweißnaht 10a ist auf der nach außen weisenden, vertikalen Fläche 11 der Traverse 2 gezogen, wozu sich eine nach unten ragende Verlängerung 12 der Konsole 9, mit der die Konsole 9 an der Traverse 2 anliegt, an der vertikalen Fläche 11 abstützt. Zwei weitere Schweißnähte 10b sind entlang der Oberseite 8 der Traverse 2 gezogen.

Die Traverse mit den darauf angeschweißten Konsolen 9 steht bei der Montage des Lagerregals als einstückiges und vorzugsweise bereits insgesamt vorlackiertes Teil zur Verfügung. Das Verschweißen der Traversen mit den Konsolen erfolgt in einem vorgelagerten Herstellungsschritt und vorzugsweise vollautomatisch. Der Fertigungsprozeß hierfür kann durch geeignete Biegewerkzeuge ferner so ausgelegt werden, daß sich verschieden hohe Konsolen innerhalb einer Fertigungslinie herstellen lassen. Die Biegung der Konsolen aus einem Blechformteil sowie das anschließende Verschweißen mit der Traverse erfolgt also in einem geschlossenen On-Line-Fertigungsprozeß, an den sich dann der Lackierprozeß anschließt.

Auf den Konsolen 9 stützen sich Tragprofile 13 ab, die sich in Richtung der Tiefe des Regals und damit zugleich quer zu den Traversen 2 erstrecken. Fig. 1 läßt erkennen, daß jedes Tragprofil 13 mit zumindest zwei Traversen 2 über die entsprechenden Konsolen 9 verbunden ist, so daß sich eine zumindest doppelte Abstützung jedes Tragprofils ergibt. Bei der auf den Zeichnungen dargestellten Ausführungsform weisen die Tragprofile 13 jeweils eine Länge auf, die den Abstand zwischen der vorderen und der hinteren Traverse 2 deutlich übersteigt, wodurch die Tragprofile 13 vorne und hinten frei aus dem Lagerregal auskragen und Platz für insgesamt zwei hintereinander angeordnete Paletten 5 bieten.

Um zu vermeiden, daß infolge von Kippmomenten die Tragprofile 13 an einem Ende von den Konsolen bzw. Traversen abheben, ist eine vertikale Verriegelung der Tragprofile 13 an den Konsolen 9 vorgesehen. Hierzu sind die über ihre gesamte Länge einen konstanten Querschnitt aufweisenden Tragprofile 13 C-förmig mit nach unten weisender Öffnung gestaltet, wie besonders gut Fig. 2 erkennen läßt. Die beiden nach innen hin aufeinander zu gerichteten Abschnitte 14 des Tragprofils 13 hintergreifen von unten Erweiterungen 15, die am oberen Ende der Konsole 9 angeformt sind und sich in Traversenlängsrichtung erstrecken. Aufgrund dieser Gestaltung der Konsole 9 sowie der Querschnittsgestaltung des Tragprofils 13 kann das Tragprofil 13 auch im Falle eines Kippmomentes nicht von der Konsole 9 abheben. Andererseits läßt sich das Tragprofil 13 infolge dieser Gestaltung nicht ohne weiteres von oben auf die Konsole 9 aufsetzen, weshalb es erforderlich sein kann, das Tragprofil von einer der Stirnseiten des Regals her auf die Konsole aufzuschieben. Die aufeinander zu gerichteten Abschnitte 14 des Tragprofils 13 bilden daher Verriegelungsabschnitte, die unter die Erweiterungen 15 greifen, wobei letztere in funktioneller Hinsicht den verriegelnden Bereich der Konsole 9 bilden.

Das C-förmig gestaltete Tragprofil 13 ist im Bereich seiner nach unten weisenden Öffnung und anschließend an die beiden aufeinander zu gerichteten Abschnitte 14 mit daran durch Biegen angeformten Randstreifen 16 versehen, die montagegemäß nach unten weisen. Mit ihren Innenflächen liegen die Randstreifen 16 an Seitenwänden 17 der Konsole 9 an. Beide Teile sind mit fluchtenden Öffnungen versehen, durch die sich eine Schraube 18, ein Stift oder ein ähnliches Verriegelungselement hindurchstecken läßt. Auf diese Weise wird das Tragprofil 13 in seiner Längsrichtung verriegelt, es kann also nicht mehr in Richtung der Tiefe des Regals verschoben werden.

Diese Verriegelung des Tragprofils in seiner Längsrichtung sollte nicht an allen Konsolen vorgenommen werden, da dies den Montageaufwand erschwert, ohne in statischer Hinsicht Vorteile zu bieten. Vielmehr erfolgt die Verschraubung oder dgl. nur an der Konsole der vorderen Traverse 2a, wohingegen das Hindurchführen der Schrauben 18 an den Konsolen der hinteren Traverse 2b entbehrlich ist.

Bei dem Aufschieben der Tragprofile 13 während der Endmontage ist es für den Monteur vorteilhaft, das Tragprofil zunächst auf die Konsole auf der hinteren Traverse 2b aufzusetzen, dann im Eingriff mit der hinteren Konsole nach hinten zu schieben, und schließlich in einem letzten Schritt das Tragprofil wieder nach vorne zu ziehen, diesmal zusätzlich in formschlüssigem Eingriff mit der vorderen Konsole auf der vorderen Traverse 2a. Abschließend wird dann noch die Schraube 18 hindurchgesteckt und gesichert. Damit ist das Tragprofil dann in jeder Richtung ausreichend gesichert, einschließlich gegen auftretende Kippmomente sowie gegen Kräfte in Ein- und Auslagerungsrichtung 20.

Fig. 1 läßt erkennen, daß für die Tragprofile 13 dieselben Profile verwendet werden können wie für die vertikalen Stützen 1, bei denen es sich ebenfalls um C-Profile handelt.

### Bezugszeichenliste

- 1: Stütze
- 2: Traverse
- 2a: vordere Traverse
- 2b: hintere Traverse
- 3: Verstrebung
- 4: Verbindungselement
- 5: Palette
- 6: Unterholz der Palette
- 7: Freiraum
- 8: Oberseite der Traverse
- 9: Konsole
- 10a: Schweißnaht
- 10b: Schweißnaht
- 11: vertikale Fläche
- 12: Verlängerung
- 13: Tragprofil
- 14: aufeinander zu gerichtete Abschnitte
- 15: Erweiterung
- 16: nach unten ragender Profilabschnitt, Randstreifen
- 17: Seitenwand
- 18: Schraube
- 19: nach unten ragender Profilabschnitt
- 20: Ein- und Auslagerungsrichtung

## Patentansprüche

1. Lagerregal, vorzugsweise für die Lagerung bestückter Paletten (5), mit einer Stützkonstruktion aus vertikalen Stützen (1), zwischen denen sich quer zur Ein- und Auslagerungsrichtung (20) Traversen (2, 2a, 2b) erstrecken, sowie mit in Ein- und Auslagerungsrichtung (20) sich erstreckenden, auf einer vorderen Traverse (2a) und zusätzlich auf mindestens einer dahinter angeordneten Traverse (2b) abgestützten Tragprofilen (13), auf deren Oberseite die Paletten (5) aufliegen,
**dadurch gekennzeichnet,**
**daß** die Tragprofile (13) auf Konsolen (9) aufliegen, daß jede Konsole (9) mit der darunterliegenden Traverse (2) fest verbunden ist, und daß zum Zwecke einer vertikalen Verriegelung des Tragprofils an der Konsole das Tragprofil (13) mit mindestens einem daran ausgebildeten Verriegelungsabschnitt unter einen an der Konsole (9) ausgebildeten verriegelnden Bereich greift.

2. Lagerregal nach Anspruch 1, **dadurch gekennzeichnet, daß** jede Konsole (9) mit der darunterliegenden Traverse (2) verschweißt ist.

3. Lagerregal nach Anspruch 1 oder Anspruch 2, **dadurch gekennzeichnet, daß** die Tragprofile (13) wenigstens einen nach unten in Richtung auf die Traverse (2) ragenden Profilabschnitt (16, 19) aufweisen, der das Tragprofil (13) gegenüber der Konsole (9) in seitlicher Richtung fixiert.

4. Lagerregal nach Anspruch 1, **dadurch gekennzeichnet, daß** das Tragprofil (13) den Querschnitt eines nach unten hin offenen "C" aufweist, dessen beiden nach innen hin aufeinander zu gerichteten Abschnitte (14) die Verriegelungsabschnitte bilden.

5. Lagerregal nach einem der vorangehenden Ansprüche, **dadurch gekennzeichnet, daß** der verriegelnde Bereich der Konsole (9) durch eine Erweiterung (15) gebildet wird, die am oberen Ende der Konsole (9) angeformt ist.

6. Lagerregal nach einem der vorangehenden Ansprüche, **gekennzeichnet durch** ein mehrfach **durch** Biegen umgeformtes Blechformteil als Konsole (9).

7. Lagerregal nach einem der Ansprüche 3 bis 6, **dadurch gekennzeichnet, daß** zum Zwecke einer Verriegelung des Tragprofils in seiner Längsrichtung ein Stift, eine Schraube (18) oder dgl. durch Tragprofil (13) und Konsole (9) zugleich hindurchgeführt ist.

8. Lagerregal nach Anspruch 7, **dadurch gekennzeichnet, daß** das Tragprofil (13) nur an seiner mit der vorderen Traverse (2a) verbundenen Konsole (9) in Längsrichtung verriegelt ist, wohingegen eine entsprechende Verriegelung an der/den dahinter angeordneten Traverse/Traversen (2b) fehlt.

9. Lagerregal nach einem der Ansprüche 2 bis 8, **dadurch gekennzeichnet, daß** die Konsole (9) mit der Oberseite (8) der Traverse (2) und zusätzlich mit zumindest einer vertikalen Fläche (11) der Traverse (2) verschweißt ist.

10. Lagerregal nach einem der vorangehenden Ansprüche, **dadurch gekennzeichnet, daß** die Traverse (2) ein geschlossenes Metallprofil mit vorzugsweise rechteckigem Querschnitt ist.

## Claims

1. Storage rack, preferably for the storage of loaded pallets (5), having a supporting structure made of vertical supports (1), between which crossmembers (2, 2a, 2b) extend transversely to the storage and retrieval direction (20), and having load-bearing profiles (13) which extend in the storage and retrieval direction (20), are supported on a front crossmember (2a), and additionally on at least one crossmember (2b) arranged behind the front crossmember, and on the top side of which the pallets (5) rest, **characterized in that** the load-bearing profiles (13) rest on brackets (9), **in that** each bracket (9) is fixed to the crossmember (2) located therebeneath, and **in that**, for the purpose of vertical locking of the load-bearing profile on the bracket, the load-bearing profile (13) engages, by way of at least one locking section formed thereon, beneath a locking region formed on the bracket (9).

2. Storage rack according to Claim 1, **characterized in that** each bracket (9) is welded to the crossmember (2) located therebeneath.

3. Storage rack according to Claim 1 or Claim 2, **characterized in that** the load-bearing profiles (13) have at least one profile section (16, 19) which projects downwards in the direction of the crossmember (2) and fixes the load-bearing profile (13) in the lateral direction in relation to the bracket (9).

4. Storage rack according to Claim 1, **characterized in that** the load-bearing profile (13) has the cross section of a "C" which is open in the downward direction and of which the two sections (14) which are directed inwards towards one another form the locking sections.

5. Storage rack according to one of the preceding claims, **characterized in that** the locking region of the bracket (9) is formed by a widened portion (15) which is integrally formed at the top end of the bracket (9).

6. Storage rack according to one of the preceding claims, **characterized by** the bracket (9) being in the form of a shaped sheet-metal part which is deformed a number of times by bending.

7. Storage rack according to one of Claims 3 to 6, **characterized in that**, for the purpose of locking the load-bearing profile in its longitudinal direction, a pin, a screw (18) or the like is guided through the load-bearing profile (13) and bracket (9) at the same time.

8. Storage rack according to Claim 7, **characterized in that** the load-bearing profile (13) is only locked longitudinally on its bracket (9) which is connected to the front crossmember (2a), whereas there is no corresponding locking on the crossmember/crossmembers (2b) arranged behind the front crossmember.

9. Storage rack according to one of Claims 2 to 8, **characterized in that** the bracket (9) is welded to the top side (8) of the crossmember (2) and, in addition, to at least one vertical surface (11) of the crossmember (2).

10. Storage rack according to one of the preceding claims, **characterized in that** the crossmember (2) is a closed metal profile of preferably rectangular cross section.

## Revendications

1. Rayonnage de stockage, de préférence pour le stockage de palettes chargées (5), comportant une construction de soutien formée par des montants verticaux (1) entre lesquels s'étendent des traverses (2, 2a, 2b) perpendiculairement à la direction de mise en stock et de sortie (20), et comportant des profilés porteurs (13) s'étendant en direction de mise en stock et de sortie (20) et appuyés sur une traverse antérieure (2a) et en supplément sur au moins une traverse (2b) agencée derrière celle-ci, profilés sur la face supérieure desquels reposent les palettes (5), **caractérisé en ce que** les profilés porteurs (13) reposent sur des consoles (9), **en ce que** chaque console (9) est fermement reliée à la traverse (2) située au-dessous, et **en ce que** pour obtenir un verrouillage vertical du profilé porteur sur la console, le profilé porteur (13) s'engage par au moins un tronçon de verrouillage réalisé sur celui-ci au-dessous d'une zone de verrouillage réalisée sur la console (9).

2. Rayonnage de stockage selon la revendication 1, **caractérisé en ce que** chaque console (9) est soudée sur la traverse (2) située au-dessous.

3. Rayonnage de stockage selon l'une ou l'autre des revendications 1 et 2, **caractérisé en ce que** les profilés porteurs (13) comprennent au moins un tronçon profilé (16, 19) se projetant vers le bas en direction de la traverse (2), qui fixe le profilé porteur (13) par rapport à la console (9) en direction latérale.

4. Rayonnage de stockage selon la revendication 1, **caractérisé en ce que** le profilé porteur (13) présente la section d'un "C" ouvert vers le bas dont les deux tronçons (14) orientés vers l'intérieur l'un vers l'autre forment les tronçons de verrouillage.

5. Rayonnage de stockage selon l'une quelconque des revendications précédentes, **caractérisé en ce que** la zone de verrouillage de la console (9) est formée par un élargissement (15) qui est conformé à l'extrémité supérieure de la console (9).

6. Rayonnage de stockage selon l'une quelconque des revendications précédentes, **caractérisé par** une pièce en tôle mise en forme par cintrage multiple à titre de console (9).

7. Rayonnage de stockage selon l'une quelconque des revendications 3 à 6, **caractérisé en ce que** pour obtenir un verrouillage du profilé porteur dans sa direction longitudinale, une tige, une vis (18) ou analogue est passée simultanément à travers le profilé porteur (13) et la console (9).

8. Rayonnage de stockage selon la revendication 7, **caractérisé en ce que** le profilé porteur (13) est verrouillé en direction longitudinale uniquement au niveau de sa console (9) reliée à la traverse antérieure (2a), tandis qu'un verrouillage correspondant sur la ou les traverse(s) (2b) agencée(s) derrière celle-ci est absent.

9. Rayonnage de stockage selon l'une quelconque des revendications 2 à 8, **caractérisé en ce que** la console (9) est soudée avec la face supérieure (8) de la traverse (2) et en supplément avec au moins une surface verticale (11) de la traverse (2).

10. Rayonnage de stockage selon l'une quelconque des revendications précédentes, **caractérisé en ce que** la traverse (2) est un profilé métallique fermé de préférence de section rectangulaire.
